# EUROPÄISCHE PATENTSCHRIFT

(11) **EP 1 748 363 B1**
(45) Veröffentlichungstag und Bekanntmachung des Hinweises auf die Patenterteilung: **31.12.2008**
(21) Anmeldenummer: 06013898.9
(22) Anmeldetag: 05.07.2006
(51) Int. Cl.: G06F 13/40

(54) **Busarchitektur sowie Verfahren zum Datenaustausch**
Bus architecture and method for data exchange
Architecture de bus et procédé destiné à l'échange de données

(30) Priorität: 29.07.2005 DE 102005035611
(43) Veröffentlichungstag der Anmeldung: 31.01.2007
(73) Patentinhaber: Diehl Aerospace GmbH, 88662 Überlingen (DE)
(72) Erfinder: Hoche, Peter, 61389 Schmitten (DE); Orth, Stefan, 35713 Eschenburg (DE)
(74) Vertreter: Diehl Patentabteilung

(56) Entgegenhaltungen:
- DE-C1- 3 919 144
- US-A- 5 793 946
- US-A1- 2003 039 243

## Beschreibung

Die Erfindung betrifft eine Busarchitektur, insbesondere für ein Luftfahrzeug, mit einer Zentraleinheit, mit einer Datenleitung und mit einer Anzahl von Busteilnehmern, wobei die Zentraleinheit und die Busteilnehmer jeweils über eine Busschnittstelle an die Datenleitung angeschlossen sind. Die Erfindung betrifft weiter ein Verfahren zum Datenaustausch mit einer derartigen Busarchitektur.

Eine derartige Busarchitektur dient dazu, Daten zwischen der Zentraleinheit und den Busteilnehmern auszutauschen. Auf diese Weise können sowohl Daten über die Busteilnehmer abgerufen als auch Daten den Busteilnehmern zugeleitet werden.

Eine Busarchitektur wird in erster Linie konzipiert, um einen Datenaustausch mit einer möglichst geringen Fehlerrate zu erhalten. Dies kann beispielsweise über die Ausgestaltung der Datenleitung als solcher oder über die Art der Codierung der auszutauschenden Daten erreicht werden. Für die Codierung der Daten sind sogenannte Buskontrolleinheiten zuständig, die von einer Hardware oder einer Software stammende elektronische Daten in die für den Datenaustausch mittels der Busarchitektur vorgesehenen Daten in einem vorgegebenen Protokoll umsetzen. Die Zentraleinheit und die Busteilnehmer sind weiter durch eine Busschnittstelle an die Datenleitung angeschlossen, wobei die Busschnittstelle auf physikalischer Ebene im wesentlichen eine Pegelangleichung der von der Buskontrolleinheit gelieferten Daten in die Datenleitung hinein bewirkt. Mittels der Busschnittstelle können die einzelnen Busteilnehmer auch an- oder ausgeschaltet werden.

Busteilnehmer können Sensoren, Steuerungen, Aktuatoren, Datenspeicher oder generelle Hardware- oder Softwarebausteine sein. Die Zentraleinheit hat die Aufgabe, die einzelnen Busteilnehmer zentral zu überwachen, zu steuern oder Daten von den Busteilnehmern abzurufen. Man spricht bei der Zentraleinheit auch von einem "Master", während die über die Datenleitung an die Zentraleinheit angeschlossenen weiteren Busteilnehmer auch als "Slaves" bezeichnet werden.

Insbesondere in der Luftfahrt sind an eine Busarchitektur strenge Anforderungen hinsichtlich der Ausfallsicherheit und hinsichtlich der Fehlerrate zu stellen. Dabei würde eine Busarchitektur, bei welcher jeder Busteilnehmer über eine separate Datenleitung an die Zentraleinheit angeschlossen ist, eine geringe Fehlerquote hinsichtlich des Datenaustauschs aufweisen. Es käme zu keiner Beeinflussung durch weitere in der Datenleitung befindliche Daten. Eine solche Busarchitektur weist nachteiliger Weise jedoch ein insbesondere in der Luftfahrt nicht tolerierbares Eigengewicht auf.

Ein fehlertolerantes, serielles Bussystem wird von US 2003/0039243 offenbart.

Es ist Aufgabe der vorliegenden Erfindung, eine Busarchitektur der eingangs genannten Art anzugeben, bei welcher über eine gemeinsame Datenleitung viele Busteilnehmer angesprochen werden können, die eine hohe Verfügbarkeit aufweist, die eine Lokalisierung von Fehlern erlaubt und die insbesondere selbst bei einer Durchtrennung der Datenleitung nicht ausfällt. Weiter ist es Aufgabe der Erfindung, ein die selben Vorteile aufweisendes Verfahren zum Datenaustausch mit einer derartigen Busarchitektur anzugeben.

Die erstgenannte Aufgabe wird für eine Busarchitektur der eingangs genannten Art erfindungsgemäß dadurch gelöst, dass die Datenleitung als ein Ring ausgebildet ist, in dem beide Enden der Datenleitung an die Zentraleinheit angeschlossen sind, dass die Zentraleinheit zwischen Sende- und Empfangsbetrieb umschaltbare Sende-Empfangseinheiten aufweist, wobei eine Sende-Empfangseinheit jeweils über eine Busschnittstelle mit einem Ende der Datenleitung verbunden ist, dass die Zentraleinheit zur getakteten Aussendung der für die Busteilnehmer vorgesehenen Daten vorbereitet ist, dass die Busteilnehmer hintereinander an die Datenleitung angeschlossen sind, und dass die Busteilnehmer eine jeweils mit der zugeordneten Busschnittstelle verbundene Überwachungseinheit umfassen, die ausgelegt ist, nur nach Erhalt einer Synchronisationsnachricht einer Sendeaktivität der Schnittstelle zu aktivieren und ansonsten zu blockieren.

Die Erfindung geht in einem ersten Schritt von der Überlegung aus, dass im Falle der Durchtrennung der Datenleitung die im von der Zentraleinheit abgetrennten Teil der Datenleitung angeschlossenen Busteilnehmer unwiderruflich dem Datenaustausch entzogen sind. Dies kann jedoch verhindert werden, wenn eine Datenleitung, an der die Busteilnehmer hintereinander angeschlossen sind, nicht wie üblich in einem Abschluss endet, sondern das freie Ende wieder an die Zentraleinheit angeschlossen wird. Hierdurch wird eine ringförmige Gestalt der Datenleitung erzielt. Für die an beide Enden der Datenleitung angeschlossene Zentraleinheit wird es möglich, mit jedem Busteilnehmer Daten über zwei separate Leitungen, nämlich über die beiden Arme des gebildeten Rings, auszutauschen. Wird die Datenleitung an einer Stelle durchtrennt, so verbleibt für alle Busteilnehmer noch ein Datenaustausch in einer Richtung, da die durchtrennten Zweige der Datenleitung weiterhin jeweils an die Zentraleinheit angeschlossen bleiben.

In einem weiteren Schritt geht die Erfindung von der Überlegung aus, dass ein Fehler sich in einer solchen als Ring ausgebildeten Datenleitung leicht lokalisieren lässt, wenn die Zentraleinheit zur getakteten Aussendung der für die Busteilnehmer vorgesehenen Daten vorbereitet ist. Mit anderen Worten sendet die Zentraleinheit die für die an die Datenleitung hintereinander angeschlossenen Busteilnehmer vorgesehenen Daten oder Datenpakete entsprechend der Taktung zeitlich hintereinander versetzt. Jedes dieser Datenpakete ist für den angeschlossenen Busteilnehmer zu einer genau vorbestimmten und insbesondere vorhersagbaren Zeit verfügbar.

Wird ferner jedem Busteilnehmer eine Überwachungseinheit zugeordnet, die nur nach Erhalt einer Synchronisationsnachricht eine Sendeaktivität der Schnittstelle aktiviert und ansonsten blockiert, so senden auch die Busteilnehmer ihre Daten nur zu einer vorhersagbaren Zeit in die Datenleitung. Die von jeweils einem Busteilnehmer in die Datenleitung gesendeten Daten sind zu einer genau vorherbestimmten Zeit für die Zentraleinheit verfügbar. Da die Sendeaktivität der Schnittstelle nur nach Erhalt einer Synchronisationsnachricht aktiviert ist, wird zudem sichergestellt, dass ein defekter Busteilnehmer nicht sinnlose Daten in die Datenleitung sendet, wodurch bei einer herkömmlichen Busarchitektur die gesamte Kommunikation ausfallen kann.

Insgesamt wird ein Determinismus innerhalb der Busarchitektur erzielt. Über die zeitliche Zuordnung sind die rücklaufenden Daten der Busteilnehmer jeweils einem spezifischen Busteilnehmer zuordenbar. Sind zu einem bestimmten Zeitraum keine Daten für die Zentraleinheit verfügbar, so kann daraus geschlossen werden, dass ein spezifischer Busteilnehmer ausgefallen ist. Erkennt die Zentraleinheit innerhalb einer gewissen Zeitspanne unerwartete Daten, so kann auf einen Fehler eines spezifischen Busteilnehmers geschlossen und dieser Busteilnehmer beispielsweise deaktiviert werden. Mit anderen Worten sind auf diese Art und Weise Fehler innerhalb der Busarchitektur lokalisierbar.

Der Einsatz einer derartigen Busarchitektur ist natürlich nicht auf die Luftfahrt beschränkt. Sie kann überall dort eingesetzt werden, wo es auf eine hohe Verfügbarkeit und auf eine schnelle Lokalisierung von Fehlerquellen ankommt.

Vorteilhafterweise umfassen die Busteilnehmer jeweils einen eigenen Prozessor. Eine derartige lokale "Intelligenz" erlaubt eine Entlastung der Datenleitung, da der lokale Prozessor eigene Logikaufgaben wie komplexe Steuerungs- und/oder Überwachungsfunktionen vor Ort übernehmen kann. Über die Datenleitung der Busarchitektur werden noch Steuer- und/oder Auslesedaten mit dem Prozessor des jeweiligen Busteilnehmers ausgetauscht.

Weiter von Vorteil ist es, wenn die Busteilnehmer jeweils zwei Sende-Empfangseinheiten umfassen, wobei die erste Sende-Empfangseinheit mit dem Prozessor verbunden ist, und wobei die zweite Sende-Empfangseinheit als ein Hardware-Baustein ausgestaltet ist. Eine solche doppelte Ausgestaltung erlaubt die Implementierung einer Überwachungsfunktion, wobei sich Softwareteil und Hardwareteil gegenseitig beobachten. Insbesondere kann der Hardware-Baustein durch eine elektronische Verschaltung bei Datenempfang die gleichen Ausgangsdaten liefern wie die mit dem Prozessor verbundene Sende-Empfangseinheit.

Zweckmäßigerweise ist im Falle zweier Sende-Empfangseinheiten in dem Busteilnehmer die erste Sende-Empfangseinheit zur Überwachung von Ausgangssignalen mit der zweiten Sende-Empfangseinheit verbunden, und weist einen mit der Überwachungseinheit oder der Busschnittstelle verbundenen Signalausgang zur Ausgabe eines Kontrollsignals auf. Entdeckt die mit dem Prozessor verbundene Sende-Empfangseinheit ein atypisches Verhalten des Hardware-Bausteins, so wird über den Signalausgang mittels der Überwachungseinheit oder direkt die Busschnittstelle hinsichtlich ihrer Sendeaktivität blockiert.

In einer weiteren vorteilhaften Ausgestaltung umfassen die Busteilnehmer einen Speicherbaustein, der zur Speicherung der mittels der Zentraleinheit abzufragenden Daten während der Deaktivierung der Sendeaktivität der zugeordneten Schnittstelle vorbereitet ist. Hierdurch wird ein etwaiger Prozessor entlastet. Die Aufbereitung der Daten während der Sendeaktivität durch den Prozessor entfällt. Es werden stattdessen die in den Speicherbaustein während der Deaktivierungsphase gespeicherten Daten abgerufen und in die Datenleitung gesendet.

Umfasst die Datenleitung und/oder die Zentraleinheit eine Schnittstelle zu weiteren Bussystemen, so ermöglicht dies eine Kommunikation bzw. einen Datenaustausch zwischen verschiedenen Bussystemen. So können die von den Busteilnehmern der beschriebenen Busarchitektur erhaltenen Informationen beispielsweise in ein übergeordnetes Bussystem eingespeist werden, welches der Überwachung und Anzeige von Funktionen eines Luftfahrzeugs dient.

In einer besonders vorteilhaften Ausgestaltung der Erfindung sind die Busteilnehmer lokale elektronische Türsteuerungen eines Luftfahrzeugs. Bei modernen Flugzeugen, wie insbesondere dem Airbus A380, werden Passagiertüren und Frachttüren nicht mehr mechanisch, sondern elektronisch gesteuert und überwacht. Dabei umfasst jede Tür eine lokale Türsteuerung, die über Sensoren und Aktuatoren jede Türposition erfasst bzw. ansteuert. Insbesondere ist die Überwachung der Türschließfunktion für die Sicherheit des Flugzeugs von außerordentlicher Bedeutung. Zur Ansteuerung und zur Abfrage des jeweiligen Türstatus sind die lokalen Türsteuerungen als Busteilnehmer in die vorliegend beschriebene Busarchitektur integriert.

Vorteilhafterweise sind die Datenleitung und die Busschnittstellen CAN-Bus konform ausgelegt. Die physische Ausgestaltung eines CAN-Busses sowie die Codierung der auszutauschenden Daten bzw. das dazugehörende Protokoll sind in der ISO 11898 international standardisiert. Durch eine derartige Ausgestaltung kann auf bewährte Technologie hinsichtlich der Buskontrolleinheiten und der Busschnittstellen zurückgegriffen werden.

Zur Erhöhung der Ausfallsicherheit ist es weiter vorteilhaft, wenn die Busarchitektur dreifach redundant ausgeführt ist. In diesem Fall ist jedes einzelne Bauteil in dreifacher Ausfertigung vorhanden. Dies trifft für die Datenleitung genauso wie für die Zentraleinheit und für jeden Busteilnehmer zu. Werden widersprüchliche Informationen den drei redundanten Datenleitungen ausgelesen, so wird nach dem Mehrheitsprinzip entschieden. Eine derartig ausgelegte Busarchitektur der beschriebenen Art weist die erforderlichen Eigenschaften für ihren Einsatz in einem Luftfahrzeug auf.

Die zweitgenannte Aufgabe wird für ein Verfahren zum Datenaustausch zwischen einer Zentraleinheit und einer Anzahl von Busteilnehmern in einer Busarchitektur der eingangs genannten Art erfindungsgemäß dadurch gelöst, dass die eine Sende-Empfangseinheit der Zentraleinheit als Sender arbeitet, während die andere Sende-Empfangseinheit als Empfänger geschaltet ist, wobei die beiden Sende-Empfangseinheiten nach einem vorgegebenen Zeitraum ihre Aufgabe tauschen, dass die jeweils als Sender geschaltete Sende-Empfangseinheit mit einer vorgegebenen Taktzeit nacheinander die für die jeweiligen Busteilnehmer vorgesehenen Daten mit einem Informationssignal in die Datenleitung sendet, dass die jeweils als Empfänger geschaltete Sende-Empfangseinheit den Datenaustausch in der Datenleitung überwacht, dass jedes Informationssignal mit einer Synchronisationsnachricht und Adressiernachricht versehen wird, und dass die Busteilnehmer nur nach Erhalt des zugeordneten Synchronisationssignals für einen vorgegebenen Zeitraum senden und ansonsten nur empfangen, während das Senden blockiert ist.

Dadurch, dass die beiden Sende-Empfangseinheiten der Zentraleinheit, die jeweils mit einem Ende der ringförmigen Datenleitung verbunden sind, abwechselnd als Sender und als Empfänger arbeiten, können die in der Datenleitung umlaufenden einzelnen Datenpakete aus zwei Richtungen beobachtet und entsprechend Fehler genau lokalisiert werden. Während die eine Sende-Empfangseinheit sendet, beobachtet die andere Sende-Empfangseinheit die umlaufenden Datenpakete. Nach einer gewissen Zeit wird umgeschaltet.

Weitere Vorteile sind den Unteransprüchen zu entnehmen.

Insbesondere von Vorteil ist es, wenn die Taktzeit im Wesentlichen der Umlaufzeit eines Signals in der Datenleitung aufgeteilt auf die Anzahl der Busteilnehmer entspricht. In diesem Fall wird die Taktzeit zum Datenaustausch mit dem jeweiligen Busteilnehmer verwendet. Nach einem Umlauf in der ringförmigen Datenleitung sind Daten mit jedem Busteilnehmer ausgetauscht.

In diesem Fall ist es weiter zweckmäßig, wenn die Sende-Empfangseinheiten in der Zentraleinheit nach der Umlaufzeit ihre Aufgabe tauschen und die Busteilnehmer nach Erhalt der Synchronisationsnachricht für die Dauer der Taktzeit senden. In diesem Fall wird nach einem kompletten Datenaustausch mit allen Busteilnehmern die Überwachungsrichtung hinsichtlich Datenleitung umgekehrt. Die Fehlerlokalisation wird auf diese Weise maximiert. Für jeden Busteilnehmer wird der maximal mögliche Zeitrahmen für den Datenaustausch bereitgestellt.

Ausführungsbeispiele der Erfindung sind in einer Zeichnung näher erläutert. Dabei zeigen
- Fig. 1: schematisch eine Busarchitektur,
- Fig. 2: in einer Seitenansicht ein Flugzeug,
- Fig. 3: schematisch eine Busarchitektur zum Datenaustausch mit lokalen Türsteuerungen eines Flugzeugs,
- Fig. 4: schematisch den Aufbau eines Busteilnehmers
- Fig. 5: den zeitlichen Verlauf eines Datenaustausches innerhalb der Datenleitung und,
- Fig.6: den zeitlichen Verlauf eines Datenaustausches mit einem Busteilnehmer.

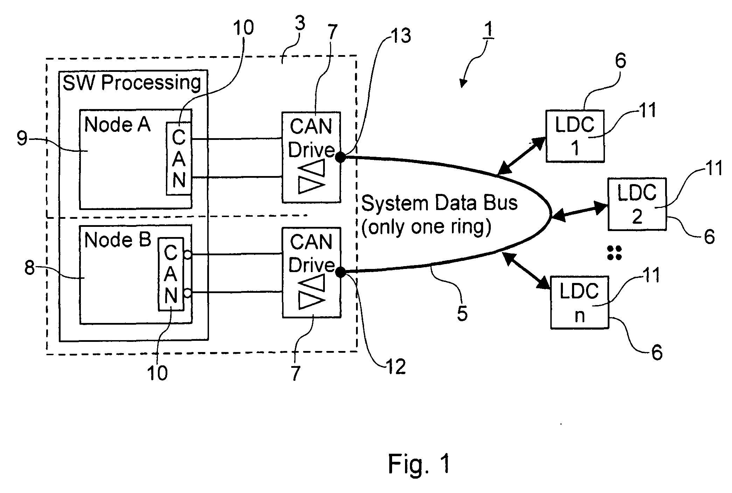

In Fig. 1 ist schematisch eine Busarchitektur 1 dargestellt, die eine Zentraleinheit 3, eine Datenleitung 5 sowie Busteilnehmer 6 umfasst. In der Busarchitektur 1 arbeitet die Zentraleinheit 3 als ein "Master", während die einzelnen Busteilnehmer 6 als "Slaves" fungieren.

Die Zentraleinheit 3 weist zwei Busschnittstellen 7 auf, die mit den Sende-Empfangseinheiten 8 und 9 über jeweils eine Buskontrolleinheit 10 verbunden sind. Die Busteilnehmer 6 sind hintereinander ebenfalls über eine nicht eingezeichnete Busschnittstelle an die Datenleitung 5 angeschlossen. Die Datenleitung 5 ist ringförmig ausgebildet, wobei ein erstes Ende 12 der Datenleitung 5 über die zugehörige Busschnittstelle 7 mit der Sende-Empfangseinheit 8 und ein zweites Ende 13 der Datenleitung 5 über die entsprechende Busschnittstelle 7 mit der weiteren Sende-Empfangseinheit 9 verbunden ist. Die beiden Sende- Empfangseinheiten 8 bzw. 9 arbeiten abwechselnd als Sender und als Empfänger. Dabei werden mittels der Buskontrolleinheiten 10 die Daten für die Datenleitung 5 codiert bzw. für die Sende-Empfangseinheiten 8 und 9 decodiert; die Busschnittstellen 7 dienen der Pegelanpassung der auszutauschenden Daten. Sowohl die Buskontrolleinheiten 10 als auch die Busschnittstellen 7 arbeiten in beide Richtungen.

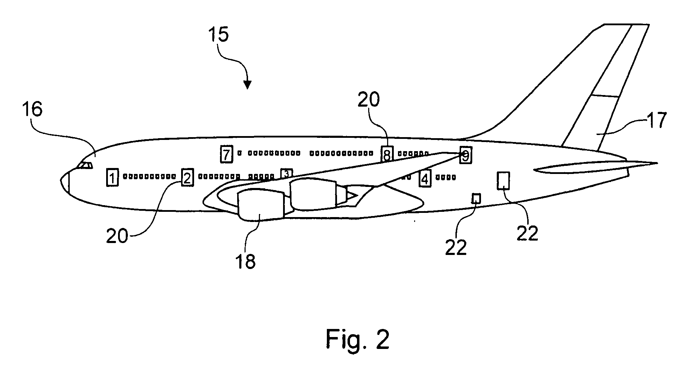

Fig. 2 zeigt in einer Seitenansicht ein modernes Passierflugzeug 15, von welchem das Cockpit 16, die Heckflosse 17 sowie die Triebwerke 18 deutlich zu erkennen sind. Ein derartiges Flugzeug 15 weist beidseitig eine Reihe von Passagiertüren 20 und Frachttüren 22 auf. Sowohl die Passagiertüren 20 als auch die Frachttüren 22 sind mit lokalen Türsteuerungen versehen, die als Busteilnehmer 6 in die Busarchitektur 1 gemäß Fig. 1 eingebunden sind.

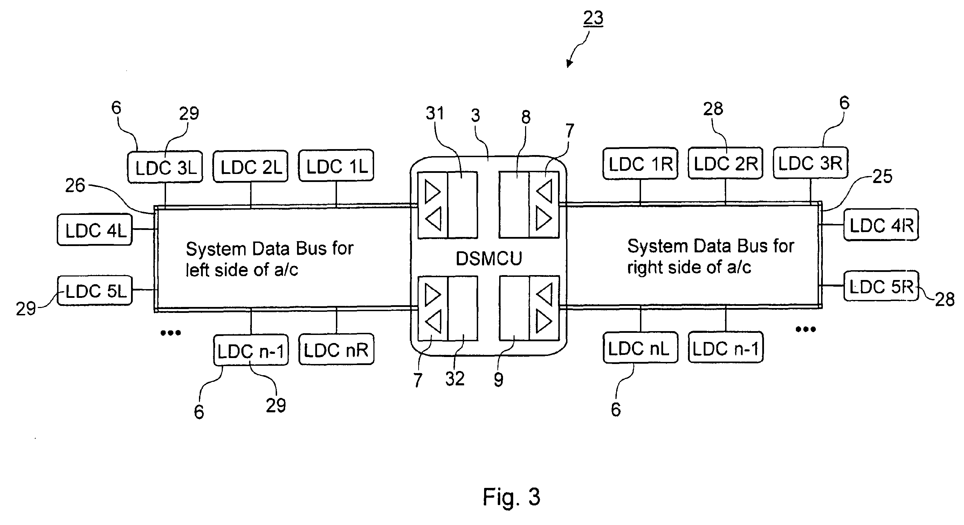

Um einen ausreichend schnellen Datenaustausch zwischen der Zentraleinheit und den lokalen Türsteuerungen zu erreichen, sind die auf der rechten Seite des Flugzeugs 15 angeordneten rechten Türsteuerungen und die auf der linken Seite des Flugzeugs 15 angeordneten linken Türsteuerungen jeweils an eine eigene Datenleitung angeschlossen. Dies wird durch Fig. 3 ersichtlich, die schematisch eine weitere Busarchitektur 23 zur getrennten Ansteuerung der rechten und linken Türsteuerungen des gezeigten Flugzeugs 15 zeigt. Es ist die Zentraleinheit 3 erkennbar, die über Busschnittstellen 7 an eine rechte Datenleitung 25 und an eine linke Datenleitung 26 angeschlossen ist. An der rechten Datenleitung 25 sind als Busteilnehmer 6 die auf der rechten Seite des Flugzeugs 15 angeordneten lokalen Türsteuerungen 28 angeschlossen. An der linken Datenleitung 26 sind als Busteilnehmer 6 die auf der linken Seite des Flugzeugs 15 angeordneten linken Türsteuerungen 29 angeschlossen.

Die Zentraleinheit 3 weist entsprechend insgesamt vier Sende-Empfangseinheiten 8, 9, 31 bzw. 32 auf. Dabei dienen die Sende-Empfangseinheiten 8 und 9 zum Senden bzw. zum Empfangen von Daten in bzw. aus der rechten Datenleitung 25. Die Sende-Empfangseinheiten 31 bzw. 32 sind entsprechend der linken Datenleitung 26 zugeordnet.

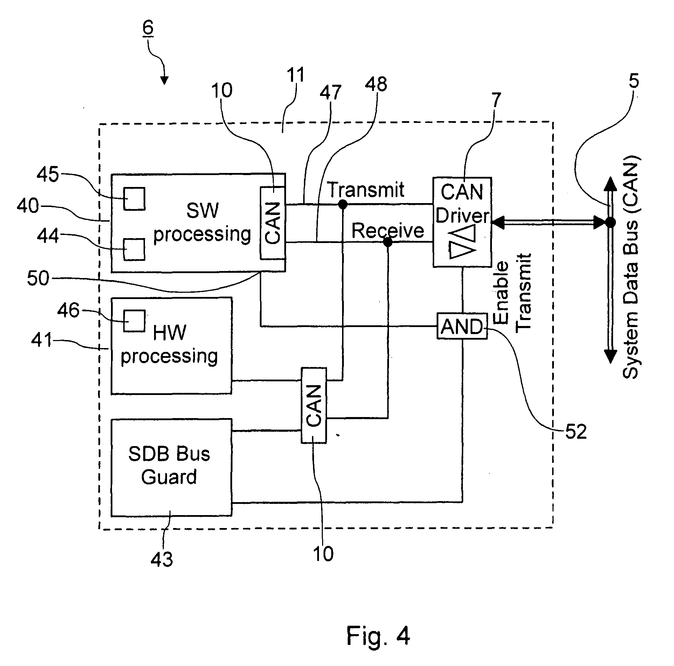

In Fig. 4 ist schematisch der Aufbau eines Busteilnehmers 6 dargestellt. Der Busteilnehmer 6 weist zum Anschluss an die Datenleitung 5 zur Pegelanpassung eine Busschnittstelle 7 auf. An die Busschnittstelle 7 sind zwei Sende-Empfangseinheiten 40 und 41 angeschlossen. Zur Codierung bzw. Decodierung der auszutauschenden Daten ist jeweils eine Buskontrolleinheit 10 zwischengeschaltet. Die Sende-Empfangseinheit 40 weist einen Speicherbaustein 44 sowie einen Prozessor 45 auf. Die Sende-Empfangseinrichtung 41 umfasst einen Hardware-Baustein 46. Über die gemeinsame Sendeleitung 47 ist es der Sende-Empfangseinheit 40 möglich, die Sendedaten der Sende-Empfangseinheit 41 zu überwachen.

Die Sende-Empfangseinheit 41 teilt sich die zugeordnete Buskontrolleinheit 10 mit einer Überwachungseinheit 43, die mit der Busschnittstelle 7 verbunden ist. Die Überwachungseinheit 43 aktiviert die Sendeaktivität der Busschnittstelle 7 nur dann, wenn über die Datenleitung 5 eine entsprechend zugeordnete Synchronisationsnachricht empfangen wird. Ansonsten ist die Busschnittstelle 7 nur für den Empfang aktiviert.

Stellt die software-basierte Sende-Empfangseinheit 40 einen Fehler in den Ausgangsdaten der Sende-Empfangseinheit 41 fest, so wird ein Kontrollsignal erzeugt, welches über den Signalausgang 50 und einem Logikbaustein 52 in Form einer UND-Verknüpfung der Verbindung zwischen der Überwachungseinheit 43 und der Busschnittstelle 7 zugeführt wird. Auf diese Weise wird erreicht, dass nur bei Freigabe der Sende-Empfangseinheit 40 die Busschnittstelle 7 zum Senden aktiviert wird.

Zu einer vorgegebenen Zeit ist für den dargestellten Busteilnehmer 6 ein entsprechendes Datenpaket verfügbar, welches eine Synchronisationsnachricht und eine Adressiernachricht erhält. Die Überwachungseinheit 43 detektiert die Synchronisationsnachricht und die Adressiernachricht und erkennt, dass das folgende Datenpaket an den eigenen Busteilnehmer 6 adressiert ist. Daraufhin wird die Busschnittstelle 7 zum Senden aktiviert. Die Sende-Empfangseinheit 40 und die Sende-Empfangseinheit 41 reagieren auf die zugesendeten Daten und senden ihre Ausgangsdaten über die Busschnittstelle 7 in die Datenleitung 5. Insbesondere sendet die Sende-Empfangseinheit 40 die mittels des Prozessors 44 während der sendepassiven Zeit in den Speicherbaustein 45 eingeschriebenen Daten. Der Prozessor 44 ist beispielsweise als eine lokale Türsteuerung ausgebildet, die Daten von zahlreichen Aktuatoren und Sensoren verarbeitet und über den Speicherbaustein 45 zur Verfügung stellt. Hierdurch wird eine Abfrage des für die Sicherheit des Flugzeugs wichtigen Türstatus möglich.

Durch die Überwachungsfunktion der Sende-Empfangseinheit 40 hinsichtlich der Sendedaten der Sende-Empfangseinheit 41 wird eine zusätzliche Sicherheit gewährleistet. Weiter stellt die Überwachungseinheit 43, da sie die Busschnittstelle 7 nur für eine gewisse Zeit zum Senden aktiviert, sicher, dass nicht unnötige oder gar fälschlich erzeugte Datenmengen in die Datenleitung 5 gelangen, während in einer üblichen Busarchitektur eine als "Babbling-Idiot" ausgefallene Sendeeinheit durch die Mengen an unsinnigen Daten die Datenleitung 5 blockiert, werden im vorliegenden Fall, falls der Prozessor 43 fehlerhaft als "Babbling-Idiot" arbeitet, nur für den geöffneten Zeitraum der Sendeaktivität der Schnittstelle 7 Daten in die Datenleitung 5 gesendet. Die empfangende Sende-Empfangseinheit 8 bzw. 9 der zugeordneten Zentraleinheit 3 detektiert diese "unsinnigen" Daten und kann, da aus der Zeitkorrelation auf den fehlerhaften Busteilnehmer rückgeschlossen werden kann, Gegenmaßnahmen ergreifen. Die Busarchitektur insgesamt bleibt funktionsfähig.

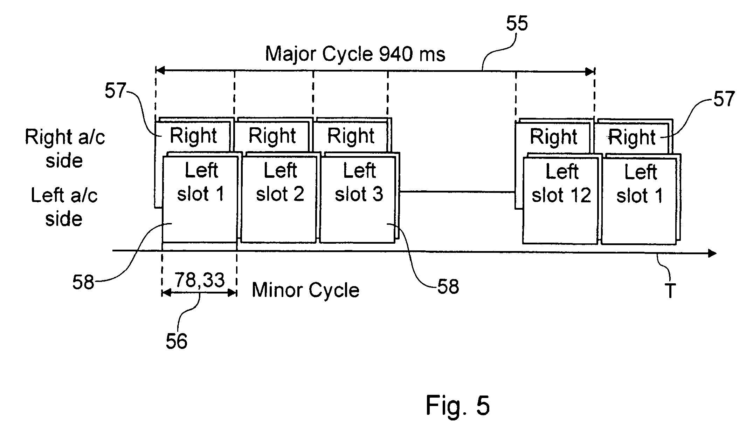

Fig. 5 zeigt den zeitlichen Verlauf des Datenaustausches innerhalb der beschriebenen Busarchitektur. Dargestellt ist der Datenaustausch für eine Umlaufzeit 55 in der ringförmigen Datenleitung. Mit einer Taktzeit 56 werden nacheinander in die ringförmige Datenleitung für die jeweiligen Busteilnehmer vorgesehene Datenpakete 57 und 58 gesendet. Die Datenpakete 57 sind dabei für auf der rechten Seite eines Flugzeugs angeordnete lokale Türsteuerungen vorgesehen, während die Datenpakete 58 den auf der linken Seite eines Flugzeugs angeordneten linken Türsteuerungen zugeordnet sind.

Innerhalb einer Umlaufzeit 55 werden alle Datenpakete 57 und 58 hintereinander einmal gesendet. Durch diesen Determinismus wird es möglich, innerhalb der Datenpakete 57 und 58 auftretende Fehler einer jeweiligen lokalen Türsteuerung zuzuordnen.

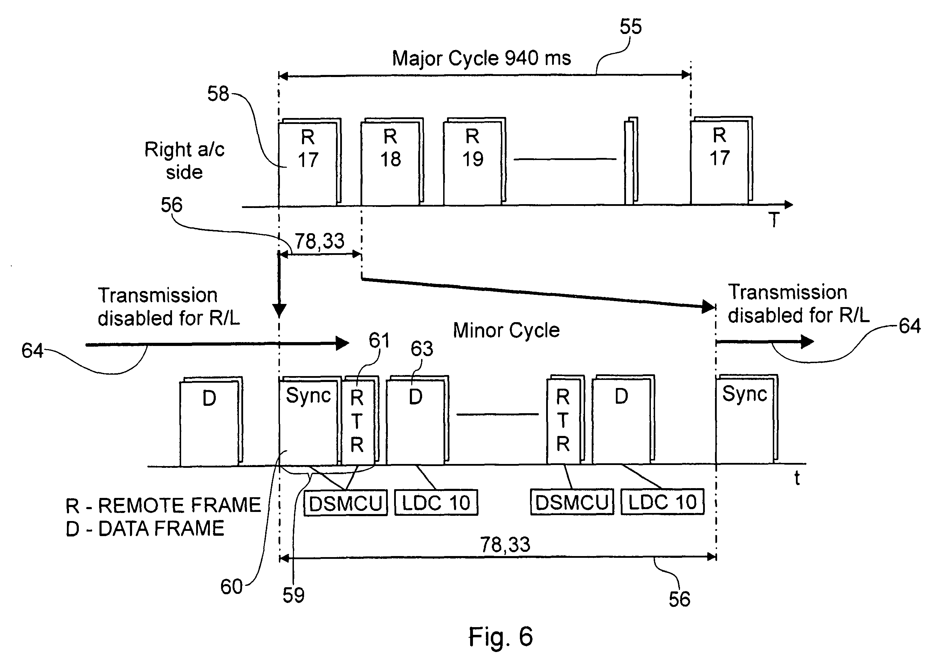

Der Aufbau eines der dargestellten Datenpakete 57 bzw. 58 innerhalb der Taktzeit 56 kann im Detail Fig. 6 entnommen werden. Zur Verdeutlichung ist als Ausschnitt aus Fig. 5 nochmals die Umlaufzeit 55 sowie die einzelnen Datenpakete 58 dargestellt. Die Taktzeit 56 ist zusätzlich aufgespreizt dargestellt. Innerhalb der Taktzeit 56 umfasst das sich in der Datenleitung befindende Datenpaket 58 ein von der Zentraleinheit erzeugtes vorangehendes Informationssignal 59, welches eine Synchronisationsnachricht 60 sowie eine Adressiernachricht 61 enthält. Nach Erhalt der Synchronisationsnachricht 60 und der Adressiernachricht 61 schaltet die in Fig. 4 gezeigte Überwachungseinheit 43 die dem Busteilnehmer zugeordnete Busschnittstelle sendeaktiv, so dass die entsprechende lokale Türsteuerung ihre Sendedaten 63 in die Datenleitung sendet. Nach einer vorgegebenen Zeit, die der Taktzeit 56 entspricht, wird die Sendefunktion der entsprechenden Schnittstelle deaktiviert. In den durch die Pfeile 64 dargestellten Zeiträumen sendet die spezifische lokale Türsteuerung bzw. der spezifische Bustelinehmer keine Daten in die Datenleitung. Diese Zeiträume stehen den anderen Busteilnehmern zur Verfügung.

### Bezugszeichenliste

- T: Zeit
- 1: Busarchitektur
- 3: Zentraleinheit
- 5: Datenleitung
- 6: Busteilnehmer
- 7: Busschnittstelle
- 8,9: Sende-Empfangseinheit (Zentraleinheit)
- 10: Buskontrolleinheit
- 11: Türsteuerungen
- 12: erstes Ende
- 13: zweites Ende
- 15: Flugzeug
- 16: Cockpit
- 17: Heckflosse
- 18: Triebwerke
- 20: Passagiertüren
- 22: Frachttüren
- 23: Busarchitektur
- 25: rechte Datenleitung
- 26: linker Datenleitung
- 28: Türsteuerungen, rechts
- 29: Türsteuerungen, links
- 31,32: Sende-Empfangseinheit (Zentraleinheit)
- 40,41: Sende-Empfangseinheit (Busteilnehmer)
- 43: Überwachungseinheit
- 44: Speicherbaustein
- 45: Prozessor
- 46: Hardware-Baustein
- 47: Sendeleitung
- 48: Empfangsleitung
- 50: Signalausgang
- 52: Logikbaustein
- 55: Umlaufzeit
- 56: Taktzeit
- 57: Datenpaket, linke Türsteuerungen
- 58: Datenpaket, rechte Türsteuerungen
- 59: Informationssignal
- 60: Synchronisationsnachricht
- 61: Adressiernachricht
- 63: Sendedaten
- 64: Zeitraum

## Patentansprüche

1. Busarchitektur (1, 23), insbesondere für ein Luftfahrzeug, mit einer Zentraleinheit (3), mit einer Datenleitung (5) und mit einer Anzahl von Busteilnehmern (6), wobei die Zentraleinheit (3) und die Busteilnehmer (6) jeweils über eine Busschnittstelle (7) an die Datenleitung (5) angeschlossen sind, wobei
die Datenleitung (5) als ein Ring ausgebildet ist, indem beide Enden (12 bzw. 13) der Datenleitung (5) an die Zentraleinheit (3) angeschlossen sind,
die Zentraleinheit (3) zwei zwischen Sende- und Empfangsbetrieb umschaltbare Sende-Empfangseinheiten (8,9,31,32) aufweist, wobei eine Sende-Empfangseinheit (8,9,31,32) jeweils über eine Busschnittstelle (7) mit einem Ende (12 bzw. 13) der Datenleitung (5) verbunden ist,
die Zentraleinheit (3) zur getakteten Aussendung der für die Busteilnehmer (6) vorgesehenen Daten vorbereitet ist,
die Busteilnehmer (6) hintereinander an die Datenleitung (5) angeschlossen sind, und
die Busteilnehmer (6) eine jeweils mit der zugeordneten Busschnittstelle (7) verbundene Überwachungseinheit (43) umfassen, die ausgelegt ist, nur nach Erhalt einer Synchronisationsnachricht (60) eine Sendeaktivität der Busschnittstelle (7) zu aktivieren und ansonsten zu blockieren.

2. Busarchitektur (1,23) nach Anspruch 1,
**dadurch gekennzeichnet,**
**dass** die Busteilnehmer (6) jeweils einen eigenen Prozessor (45) umfassen und dass die Busteilnehmer (6) vorzugsweise jeweils zwei Sende-Empfangseinheiten (40,41) umfassen, wobei die erste Sende-Empfangseinheit (40) mit dem Prozessor (45) verbunden ist, und wobei die zweite Sende-Empfangseinheit (41) als ein Hardwarebaustein (46) ausgestaltet ist,
wobei insbesondere vorgesehen ist, dass in einem Busteilnehmer (6) die erste Sende-Empfangseinheit (40) zur Überwachung von Ausgangssignalen mit der zweiten Sende-Empfangseinheit (41) verbunden ist und einen mit der Überwachungseinheit (43) oder der Busschnittstelle (7) verbundenen Signalausgang (50) zur Ausgabe eines Kontrollsignals aufweist.

3. Busarchitektur (1,23) nach einem der vorhergehenden Ansprüche,
**dadurch gekennzeichnet,**
**dass** die Busteilnehmer (6) einen Speicherbaustein (44) umfassen, der zur Speicherung der mittels der Zentraleinheit (3) abzufragenden Daten während der Deaktivierung der Sendeaktivität der zugeordneten Schnittstelle (7) vorbereitet ist.

4. Busarchitektur (1,23) nach einem der vorhergehenden Ansprüche,
**dadurch gekennzeichnet,**
**dass** die Datenleitung (5) und/oder die Zentraleinheit (3) eine Schnittstelle zu weiteren Bussystemen (7) umfasst.

5. Busarchitektur (1,23) nach einem der vorhergehenden Ansprüche,
**dadurch gekennzeichnet,**
**dass** die Busteilnehmer (6) lokale elektronische Türsteuerungen (28,29) eines Luftfahrzeugs sind.

6. Busarchitektur (1,23) nach einem der vorhergehenden Ansprüche,
**dadurch gekennzeichnet,**
**dass** die Datenleitung (5) und die Busschnittstellen (7) CAN-Bus konform ausgeführt sind.

7. Busarchitektur (1,23) nach einem der vorhergehenden Ansprüche,
**dadurch gekennzeichnet,**
**dass** sie dreifach redundant ausgeführt ist.

8. Verfahren zum Datenaustausch zwischen einer Zentraleinheit (3) und einer Anzahl von Busteilnehmern (6) in einer Busarchitektur (1) gemäß einem der Ansprüche 1 bis 7, wobei
die eine Sende-Empfangseinheit (8,9,31,32) der Zentraleinheit (3) als Sender arbeitet, während die andere Sende-Empfangseinheit (8,9,31,32) als Empfänger geschaltet ist, wobei die beiden Sende-Empfangseinheiten (8,9,31,32) nach einem vorgegebenem Zeitraum (64) ihre Aufgabe tauschen, dass die jeweils als Sender geschaltete Sende-Empfangseinheit (8,9,31,32) mit einer vorgegebenen Taktzeit (56) nacheinander die für die jeweiligen Busteilnehmer (6) vorgesehenen Daten mit einem Informationssignal (59) in die Datenleitung (5) sendet,
die jeweils als Empfänger geschaltete Sende-Empfangseinheit (8,9,31,32) den Datenaustausch in der Datenleitung (5) überwacht,
jedes Informationssignal (59) mit einer Synchronisationsnachricht (60) und Adressiernachricht (61) versehen wird, und
die Busteilnehmer (6) nur nach Erhalt der zugeordneten Synchronisationsnachricht (60) für einen vorgegebenen Zeitraum (64) senden und ansonsten nur empfangen, während das Senden blockiert ist, wobei vorzugsweise zusätzlich vorgesehen ist,
in den Busteilnehmern (6) mittels einer ersten und einer zweiten Sende-Empfangseinheit (40,41) die eigene Funktionsfähigkeit überwacht und abhängig von der Überwachung das Senden erlaubt oder blockiert wird und/oder
die Busteilnehmer (6) während der Blockierung des Sendens Daten speichern und die gespeicherten Daten während des Sendens in die Datenleitung gesendet werden.

9. Verfahren nach Anspruch 8,
**dadurch gekennzeichnet,**
**dass** die Taktzeit (56) im wesentlichen der Umlaufzeit (55) eines Signals in der Datenleitung (5), aufgeteilt auf die Anzahl der Busteilnehmer (6), entspricht.

10. Verfahren nach Anspruch 9,
**dadurch gekennzeichnet,**
**dass** die Sende-Empfangseinheiten (8,9,31,32) in der Zentraleinheit nach der Umlaufzeit ihre Aufgabe tauschen, und dass die Busteilnehmer (6) nach Erhalt der Synchronisationsnachricht (60) für die Dauer der Taktzeit (56) senden.

11. Verfahren nach einem der Ansprüche 8 bis 10,
**dadurch gekennzeichnet,**
**dass** die Daten gemäß einem CAN-Bus Protokoll ausgetauscht werden.

## Claims

1. Bus architecture (1, 23) particularly for an aircraft, with a central processing unit (3), with a data line (5) and with a number of bus users (6), the central processing unit (3) and the bus users (6) in each case being connected to the data line (5) via a bus interface (7), wherein
the data line (5) is constructed as a ring in which both ends (12 and 13, respectively) of the data line (5) are connected to the central processing unit (3),
the central processing unit (3) has two transceiver units (8, 9, 31, 32) which can be switched between transmit and receive mode, one transceiver unit (8, 9, 31, 32) in each case being connected to one end (12 or 13, respectively) of the data line (5) via a bus interface (7),
the central processing unit (3) is prepared for the clocked emission of the data intended for the bus users (6),
the bus users (6) are successively connected to the data line (5), and
the bus users (6) comprise a monitoring unit (43), which is in each case connected to the associated bus interface (7) and which is designed for activating a transmit activity of the bus interface (7) only after receiving a synchronization message (60), and otherwise blocking this activity.

2. Bus architecture (1, 23) according to Claim 1, **characterized in that** the bus users (6) in each case preferably comprise their own processor (45) and that the bus users (6) in each case preferably comprise two transceiver units (40, 41), the first transceiver unit (40) being connected to the processor (45) and the second transceiver unit (41) being embodied as a hardware chip (46), wherein, in particular, in a bus user (6), the first transceiver unit (40) is connected to the second transceiver unit (41) for monitoring output signals and has a signal output (50), for outputting a control signal, which is connected to the monitoring unit (43) or the bus interface (7).

3. Bus architecture (1, 23) according to one of the preceding claims, **characterized in that** the bus users (6) comprise a memory chip (44) which is prepared for storing the data to be interrogated by means of the central processing unit (3) during the deactivation of the transmit activity of the associated interface (7).

4. Bus architecture (1, 23) according to one of the preceding claims, **characterized in that** the data line (5) and/or the central processing unit (3) comprises an interface to other bus systems (7).

5. Bus architecture (1, 23) according to one of the preceding claims, **characterized in that** the bus users (6) are local electronic door controls (28, 29) of an aircraft.

6. Bus architecture (1, 23) according to one of the preceding claims, **characterized in that** the data line (5) and the bus interfaces (7) are constructed to conform to the CAN bus.

7. Bus architecture (1, 23) according to one of the preceding claims, **characterized in that** it is constructed with triple redundancy.

8. Method for exchanging data between a central processing unit (3) and a number of bus users (6) in a bus architecture (1) according to one of Claims 1 to 7, wherein the one transceiver unit (8, 9, 31, 32) of the central processing unit (3) operates as transmitter whereas the other transceiver unit (8, 9, 31, 32) is connected as receiver, the two transceiver units (8, 9, 31, 32) swapping their task after a predetermined period of time (64),
the transceiver unit (8, 9, 31, 32) in each case connected as transmitter successively sends the data intended for the respective bus users (6) with an information signal (59) into the data line (5) with a predetermined clock time (56), the transceiver unit (8, 9, 31, 32) in each case connected as receiver monitors the data exchange in the data line (5),
each information signal (59) is provided with a synchronization message (60) and addressing message (61), and
the bus users (6) only send for a predetermined period of time (64) after receiving the associated synchronization message (60) and otherwise only receive whilst the sending is blocked, wherein, preferably, in addition, in the bus users (6) their own operability is monitored by means of a first and a second transceiver unit (40, 41) and sending is allowed or blocked in dependence on the monitoring and/or the bus users (6) store data when sending is blocked, and the stored data are sent into the data line during sending.

9. Method according to Claim 8, **characterized in that** the clock time (56) essentially corresponds to the cycle time (55) of a signal in the data line (5) divided over the number of bus users (6).

10. Method according to Claim 9, **characterized in that** the transceiver units (8, 9, 31, 32) in the central processing unit swap their task after the cycle time and that the bus users (6) send for the duration of the clock time (56) after receiving the synchronization message (60).

11. Method according to one of Claims 8 to 10, **characterized in that** the data are exchanged in accordance with a CAN bus protocol.

## Revendications

1. Architecture de bus (1, 23), notamment pour un aéronef, comprenant une unité centrale (3), une ligne de données (5) et un certain nombre de périphériques de bus (6), l'unité centrale (3) et les périphériques de bus (6) étant à chaque fois raccordés à la ligne de données (5) par le biais d'une interface de bus (7), la ligne de données (5) étant réalisée sous la forme d'un anneau en ce que les deux extrémités (12 ou 13) de la ligne de données (5) sont raccordées à l'unité centrale (3), l'unité centrale (3) présentant deux unités d'émission/réception (8, 9, 31, 32) pouvant être permutées entre un mode d'émission et un mode de réception, une unité d'émission/réception (8, 9, 31, 32) étant à chaque fois reliée à une extrémité (12 ou 13) de la ligne de données (5) par le biais d'une interface de bus (7), l'unité centrale (3) étant configurée pour une émission cadencée des données prévues pour les périphériques de bus (6), les périphériques de bus (6) étant raccordés les uns derrière les autres à la ligne de données (5) et les périphériques de bus (6) comprenant une unité de surveillance (43) à chaque fois reliée avec l'interface de bus (7) correspondante, laquelle est conçue pour n'activer une activité d'émission de l'interface de bus (7) qu'après avoir reçu un message de synchronisation (60) et sinon la bloquer.

2. Architecture de bus (1, 23) selon la revendication 1, **caractérisée en ce que** les périphériques de bus (6) comprennent à chaque fois un processeur propre (45) et que les périphériques de bus (6) comprennent de préférence à chaque fois deux unités d'émission/réception (40, 41), la première unité d'émission/réception (40) étant reliée au processeur (45) et la deuxième unité d'émission/réception (41) étant réalisée sous la forme d'un composant physique (46), l'invention prévoyant notamment que dans un périphérique de bus (6), la première unité d'émission/réception (40) est reliée avec la deuxième unité d'émission/réception (41) pour surveiller les signaux de sortie et présente une sortie de signal (50) reliée avec l'unité de surveillance (43) ou l'interface de bus (7) pour délivrer un signal de contrôle.

3. Architecture de bus (1, 23) selon l'une des revendications précédentes, **caractérisée en ce que** les périphériques de bus (6) présentent un composant de mémoire (44) qui est configuré pour mémoriser les données à interroger au moyen de l'unité centrale (3) pendant la désactivation de l'activité d'émission de l'interface (7) associée.

4. Architecture de bus (1, 23) selon l'une des revendications précédentes, **caractérisée en ce que** la ligne de données (5) et/ou l'unité centrale (3) comprennent une interface vers d'autres systèmes de bus (7).

5. Architecture de bus (1, 23) selon l'une des revendications précédentes, **caractérisée en ce que** les périphériques de bus (6) sont des commandes de porte électroniques (28, 29) locales d'un aéronef.

6. Architecture de bus (1, 23) selon l'une des revendications précédentes, **caractérisée en ce que** la ligne de données (5) et les interfaces de bus (7) sont réalisées conformément au bus CAN.

7. Architecture de bus (1, 23) selon l'une des revendications précédentes, **caractérisée en ce qu'**elle est réalisée avec une triple redondance.

8. Procédé d'échange de données entre une unité centrale (3) et un certain nombre de périphériques de bus (6) dans une architecture de bus selon l'une des revendications 1 à 7, l'une des unités d'émission/réception (8, 9, 31, 32) de l'unité centrale (3) fonctionnant en tant qu'émetteur alors que l'autre unité d'émission/réception (8, 9, 31, 32) est commutée en tant que récepteur, les deux unités d'émission/réception (8, 9, 31, 32) inversant leurs rôles après une période donnée (64), que l'unité d'émission/réception (8, 9, 31, 32) qui est commutée en tant qu'émetteur envoie les unes après les autres dans la ligne de données (5), avec un temps de cycle (56) prédéfini, les données prévues pour le périphérique de bus (6) correspondant avec un signal d'information (59), l'unité d'émission/réception (8, 9, 31, 32) qui est à chaque fois commutée en tant que récepteur surveillant l'échange de données dans la ligne de données (5), chaque signal d'information (59) étant doté d'un message d'information (60) et d'un message d'adressage (61) et les périphériques de bus (6) n'émettant qu'après avoir reçu le message de synchronisation (60) associé pendant une période (64) prédéfinie et sinon ne faisant que recevoir, alors que l'émission est bloquée, l'invention prévoyant de préférence en plus que l'aptitude au fonctionnement propre est surveillée dans les périphériques de bus (6) au moyen d'une première et d'une deuxième unité d'émission/réception (40, 41) et que l'émission est autorisée ou bloquée en fonction de la surveillance et/ou les périphériques de bus (6) mémorisant les données pendant le blocage de l'émission et les données mémorisées étant envoyées dans la ligne de données pendant l'émission.

9. Procédé selon la revendication 8, **caractérisé en ce que** le temps de cycle (56) correspond pour l'essentiel au temps de circulation (55) d'un signal dans la ligne de données (5), distribué sur le nombre donné de périphériques de bus (6).

10. Procédé selon la revendication 9, **caractérisé en ce que** les unités d'émission/réception (8, 9, 31, 32) dans l'unité centrale échangent leurs rôles après le temps de circulation et que les périphériques de bus (6) émettent pendant la durée du temps de cycle (56) après avoir reçu le message de synchronisation (60).

11. Procédé selon l'une des revendications 8 à 10, **caractérisé en ce que** les données sont échangées conformément à un protocole de bus CAN.
